# EUROPÄISCHE PATENTSCHRIFT

(11) **EP 1 462 673 B1**
(45) Veröffentlichungstag und Bekanntmachung des Hinweises auf die Patenterteilung: **02.11.2005**
(21) Anmeldenummer: 04003248.4
(22) Anmeldetag: 13.02.2004
(51) Int. Cl.: F16D 66/02

(54) **Verfahren und Vorrichtung zum Überwachen einer elektromagnetisch betätigbaren Bremse**
Procedure and device for monitoring an electomagnetically applied brake
Procédé et dispositif de surveillance d'un frein à sérage électromagnétique

(30) Priorität: 28.03.2003 DE 10314390
(43) Veröffentlichungstag der Anmeldung: 29.09.2004
(73) Patentinhaber: Pintsch Bamag Antriebs- und Verkehrstechnik GmbH, 46537 Dinslaken (DE)
(72) Erfinder: Chmela, Heinz, 46499 Hamminkeln (DE); Neth, Andrè, 46539 Dinslaken (DE)
(74) Vertreter: Grünecker, Kinkeldey, Stockmair & Schwanhäusser Anwaltssozietät

(56) Entgegenhaltungen:
- WO-A-03/032479
- DE-A- 3 739 836
- DE-A- 19 548 520
- DE-C- 19 519 434
- DE-C- 19 814 042
- US-B1- 6 226 167

## Beschreibung

Die Erfindung betrifft ein Verfahren und eine Vorrichtung zum Überwachen einer elektromagnetisch betätigbaren Bremse mit einer ein Magnetfeld erzeugenden Spule und einer durch das Magnetfeld bewegbaren Ankerscheibe, bei dem das Magnetfeld durch Beaufschlagen der Spule mit einem Spulenstrom erzeugt und die Bewegung der Ankerscheibe durch Überwachen des Zeitverlaufs des Spulenstroms bestimmt wird.

Ein derartiges Verfahren ist beispielsweise aus US-B-6226167 bekannt. Gemäß der Lehre dieser Druckschrift wird bei einer gleichstrombetriebenen Bremse ein Abfall im Spulenstrom dazu benutzt, den Anschlag der Ankerscheibe an einem Magnetkörper der Bremse festzustellen.

Aus der nachveröffentlichten WO-A-03/032479, ist ein Verfahren bekannt, bei dem die Bewegung der Ankerscheibe durch Überwachung sowohl des Spulenstroms als auch der zeitlichen Ableitung des Spulenstroms bestimmt wird.

Die gattungsbildende DE-A-195 48 520 befasst sich mit einem Verfahren und einer Vorrichtung, mit denen die Luftspaltdicke einer Kupplung oder einer Bremse erfasst wird. Dabei wird im eingefallenen Zustand der Bremse die Spule des Elektromagneten mit einer impulsförmigen Spannung beaufschlagt, die zu klein ist, um eine Bewegung der Ankerscheibe zu bewirken. Aus dem Verlauf der impulsförmigen Spannung die Induktivität der Elektromagneten und über die Induktivität die Luftspaltdicke bestimmt werden.

Andere Arten von Verschleißmessungen sind in der DE-A-37 39 836, der DE-C-198 14 042 und der DE-C-195 19 434 bekannt.

Für den Betrieb elektromagnetischer Bremsen, beispielsweise in Krananlagen von Häfen, ist es jedoch nicht nur sinnvoll, die Bewegung der Ankerscheibe, sondern auch den Verschleißzustand der Bremse zu überwachen. Mit diesen Informationen könnten Wartungsarbeiten an der Bremse mit eventuellen planmäßigen Wartungsarbeiten an anderen Einrichtungen der Krananlagen, wie den Seilen und Elektromotoren, abgestimmt werden. Dadurch ließe sich der Verwaltungsaufwand sowie die Wartungskosten senken.

Im Stand der Technik wurde der Verschleiß von elektromagnetischen Bremsen bislang über Näherungsschalter, wie induktive Schalter oder rein mechanische Mikroschalter, bestimmt. Diese Art der Verschleißbestimmung erfordert zusätzliche Leitungen und Auswerteeinheiten. Eine sehr einfache Art der Verschleißüberwachung ist in der WO-A-03/032479 beschrieben, wo bei einer trotz anliegendem Spulenstrom unbeweglicher Ankerscheibe ein zu großes Bremsenspiel diagnostiziert wird.

In Anbetracht der bisher bekannten Lösungen zur Überwachung von elektromagnetischen Bremsen liegt der Erfindung daher die Aufgabe zugrunde, ein einfaches Verfahren zu entwickeln, mit dem ohne großen konstruktiven Aufwand der Verschleißzustand der Bremse ermittelt und gegebenenfalls auch fernüberwacht werden kann.

Diese Aufgabe wird durch die Merkmale des Anspruchs 1 gelöst.

Der Vorteil dieses Verfahrens liegt darin, dass der Betriebszustand der Bremse weitgehend ortsunabhängig überwacht werden kann, so lange nur auf die Versorgungsleitungen der Spule der Bremse zugegriffen werden kann. Somit kann jede Art von Bremse überwacht werden. Das Verfahren ist außerdem unabhängig davon, ob eine mit Gleichstrom oder eine mit gleichgerichtetem Wechselstrom betriebene Bremse verwendet wird.

Die Verfahren der US-B-6226167 und der WO-A-03/032479 werden durch das erfindungsgemäße Verfahren dahingehend erweitert, dass nun auch ein Maß für den Verschleißzustand der Bremse berechnet und als Signal ausgegeben wird. Dadurch erhalten die Betreiber der Bremse die Möglichkeit, in Abhängigkeit vom Vorliegen des Verschleißzustands Wartungsarbeiten zu planen und mit eventuellen anderen Wartungsarbeiten zu koordinieren. Die Betriebskosten können so gesenkt werden.

Das erfindungsgemäße Verfahren beruht darauf, dass im Verlauf des Spulenstroms zunächst der Einschaltpunkt bestimmt wird, also der Zeitpunkt, zu dem sich die Ankerscheibe in Bewegung setzt. Der Spulenstrom zu diesem Zeitpunkt wird dann mit einem vorbestimmten ersten Grenzwert verglichen und aus dem Unterschied dieser beiden Werte können Rückschlüsse auf den Verschleißzustand der Bremse getroffen werden. Der erste Grenzwert entspricht dabei einem vorbestimmten, vorab beispielsweise durch Versuche oder Computersimulation festgelegten Verschleißzustand der Bremse, der so als Referenz für den über den Einschaltpunkt gemessenen Verschleißzustand dient.

Zur Bestimmung des Einschaltpunktes kann neben dem Spulenstrom auch die zeitliche Ableitung des Spulenstroms überwacht werden.

Um nicht nur gleichstrombetriebene Bremsen, sondern auch Bremsen überwachen zu können, die mit Einweg- oder Zweiweggleichrichtern betrieben werden, kann zur Bestimmung des Einschaltpunkts wenigstens ein den Spulenstrom repräsentierendes Referenzsignal gebildet werden, in dem die von der Gleichrichtung enthaltenden Wechselstromanteile herausgefiltert sind. Durch die Verwendung des Referenzsignals, beispielsweise in Form eines gleitenden Mittelwerts oder einer Treppenkurve, anstelle des Spulenstroms kann der Einschaltpunkt weitgehend unbeeinflusst vom Wechselstrom genau bestimmt werden.

Das erfindungsgemäße Verfahren unterscheidet sich erheblich von dem Verfahren und der Vorrichtung zur Steuerung und Erfassung der Bewegung eines Ankers eines elektromagnetischen Ventils der WO-A-9007118, wo der Spulenstrom von Einspritzventilen überwacht wird. Bei Einspritzventilen sind die Größen der Schaltströme, die bewegten Massen des Ankers und die Antwortzeiten im Vergleich zu Bremsen so unterschiedlich, dass derartige Verfahren nicht ohne Weiteres bei Bremsen angewendet werden können. Zudem ist in der WO-A-9007118 die Verschleißproblematik überhaupt nicht angesprochen, sie spielt bei Einspritzventilen auch eine eher untergeordnete Rolle.

Die erfindungsgemäße Lösung unterscheidet sich ferner von dem Verfahren und der Vorrichtung, wie sie in der DE-A-195 48 520 beschrieben sind, dadurch, dass kein Messstrom verwendet wird. Bei dem Verfahren und der Vorrichtung wird insbesondere kein Vergleich der Einschaltströme durchgeführt und ein für den Bewegungsbeginn der Ankerscheibe repräsentativer Einschaltpunkt bestimmt.

Das erfindungsgemäße Verfahren kann durch eine Reihe von vorteilhaften, voneinander unabhängigen Ausgestaltungen weiterentwickelt werden. Auf diese Ausgestaltungen und die mit diesen Ausgestaltungen jeweils verbundenen Vorteile wird im Folgenden kurz eingegangen.

In einer vorteilhaften Ausgestaltung kann der Spulenstrom zum Einschaltpunkt zusätzlich mit einem weiteren vorbestimmten zweiten, Grenzwert verglichen werden, der für einen vorbestimmten, vom ersten Verschleißzustand unterschiedlichen zweiten Verschleißzustand repräsentativ ist. Durch den Vergleich des Spulenstroms mit zwei unterschiedlichen Grenzwerten kann die Genauigkeit bei der Bestimmung des Verschleißzustandes der Bremse erhöht werden.

Diese Ausgestaltung kann ferner dahingehend weiterentwickelt sein, dass die Lage des Spulenstroms am Einschaltpunkt innerhalb eines vom ersten und zweiten Grenzwert aufgespannten Verschleißbereiches bestimmt wird. Durch die Lage des Spulenstroms innerhalb des Verschleißbereichs kann in einer besonders einfachen Ausgestaltung auf den Verschleißzustand der Bremse geschlossen werden. Insbesondere können gemäß einer Weiterentwicklung die Grenzwerte so gewählt sein, dass die Lage des gemessenen Spulenstroms am Einschaltpunkt innerhalb des Verschleißbereichs proportional zur verbleibenden Betriebsdauer im laufenden Wartungsintervall ist. Dies kann beispielsweise dadurch erreicht werden, dass der eine Grenzwert den Verschleißzustand der noch unbenutzten Bremse, also der Bremse ohne jeden Verschleiß, darstellt, und dass der zweite Grenzwert den Verschleißzustand einer verschlissenen, wartungsreifen Bremse darstellt. Aus der Lage des gemessenen Spulenstroms am Einschaltpunkt innerhalb des solchermaßen bestimmten Verschleißbereichs kann ohne großen Aufwand auf den Ablauf des Wartungsintervalls geschlossen werden.

In einer weiteren Ausgestaltung kann aus der Differenz des Spulenstroms zum Einschaltpunkt mit dem Grenzwert oder den Grenzwerten die verbleibende Betriebsdauer der Bremse zur nächsten Wartung mittels einer Funktion berechnet werden, die den Verschleißverlauf der Bremse genauer abbildet. Dieser Berechnung kann beispielsweise ein Verschleißmodell zugrunde liegen, durch das der Differenz zwischen dem gemessenen Spulenstrom zum Einschaltpunkt und dem Grenzwert eine Betriebsdauer zugeordnet wird. Das Verschleißmodell kann eine lineare oder nichtlineare, beispielsweise exponentielle Funktion beinhalten, durch die die Differenz auf die Betriebsdauer abgebildet wird. Beim Verschleißmodell kann auch die Betriebsgeschichte, beispielsweise der Verlauf oder die Zeitdauer von Bremsvorgängen und/oder Umweltbedingungen, der Bremse berücksichtigt werden.

Angesichts der oft langen Wartungsintervallen von Bremsen kann es sich als vorteilhaft erweisen, dass der Verschleißzustand der Bremse bei dieser Ausgestaltung nur angezeigt wird, wenn die Länge der verbleibenden Betriebsdauer unter einem vorbestimmten Wert gesunken ist. Auf diese Weise wird vermieden, dass der Betreiber der Bremse durch unnötige Informationen verwirrt wird.

Die Länge des Wartungsintervalls ist oftmals abhängig von der Betriebsgeschichte der Bremse. Die Betriebsgeschichte umfasst die Stillstandszeiten und -dauern der Bremse, die Häufigkeit und Stärke der Bremsvorgänge und gegebenenfalls die Umgebungsbedingungen, die sich beispielsweise bei Schiffskränen stark ändern können. Anhand der Betriebsgeschichte kann der durch den Vergleich des Spulenstroms zum Einschaltpunkt mit dem oder den Grenzwerten ermittelte Verschleißzustand in einem zusätzlichen Verfahrensschritt korrigiert werden. Beispielsweise können bei einer Vielzahl von unmittelbar aufeinanderfolgenden Bremsvorgängen Faktoren abgespeichert sein, mit denen der aus dem vorangegangenen Verfahrensschritt berechnete Verschleißzustand multipliziert wird.

Das Speichern zumindest eines Teils der Betriebsgeschichte der Bremse kann auch aus versicherungstechnischer Sicht vorteilhaft sein, um Manipulationen an der Bremse nachzuweisen und die Haftungsfrage zu klären.

Außerdem kann eine Gewichtung der im laufenden Wartungsintervall erfolgten Bremsbetätigungen in Abhängigkeit vom Verschleißzustand erfolgen. Beispielsweise kann ein Bremsvorgang unter hoher Last bei einer nahezu wartungsreifen Bremse dazu führen, dass noch während des Bremsvorgangs die Bremse zur Wartung fällig wird. Dies kann bei dieser vorteilhaften Ausgestaltung durch entsprechende Zuordnung von Faktoren, durch die das berechnete Wartungsintervall modifiziert wird, berücksichtigt werden.

Der Einschaltpunkt kann gemäß einer weiteren vorteilhaften Ausgestaltung aus dem dynamischen Verlauf des Spulenstromes dadurch bestimmt werden, dass zunächst ein erster positiver Schwellenwert vom Spulenstrom überschritten und nachfolgend die zeitliche Ableitung des Spulenstroms oder eine die zeitliche Änderung repräsentierende Referenzgröße sich um einen Betrag ändert, der größer als ein zweiter Schwellenwert ist. Sind diese beiden Kriterien erfüllt, dann wird nach dem Maximum des Spulenstroms zwischen dem Überschreiten des ersten positiven Schwellenwertes durch den Spulenstrom und dem Unterschreiten der zeitlichen Ableitung des Spulenstromes gesucht. Dieser Maximalwert wird dann als Spulenstrom zum Einschaltpunkt bestimmt.
Der Maximalwert kann auf analoge oder digitale Weise, durch einen Schleppzeiger, der jeweils das Maximum des Spulenstroms analog hält oder durch eine Suche in einer abgespeicherten Zeitreihe von digitalisierten Werten des Spulenstromes bestimmt werden. Da das erfindungsgemäße Verfahren keine zusätzlichen Sensoren oder Sensorleitungen benötigt, um den Verschleißzustand der Bremse zu bestimmen, kann der Spulenstrom von einem von der Bremse entfernten Ort aus überwacht werden. Beispielsweise kann die Vorrichtung an dem Ort aufgestellt werden, an dem bereits die Steuerelektrik für die Bremse untergebracht ist, oder in der Nähe eines Benutzers, so dass dieser sofort die Ausgabe des für den Verschleißzustand repräsentativen Signals bemerkt und entsprechende Maßnahmen ergreifen kann.

Die Erfindung betrifft neben dem oben erläuterten Verfahren und seinen weiteren Ausgestaltungen auch eine Bremsenüberwachungsvorrichtung zum Anschluss an Spulenversorgungsleitungen einer elektromagnetisch betätigbaren Bremse, mit einem Sensor, durch den ein zur Betätigung der Bremse an die Spule geleiteter Spulenstrom erfassbar ist, und mit einer Auswerteeinheit, durch die in Abhängigkeit vom zeitlichen Verlauf ein Einschaltpunkt als für den Beginn der Bewegung der Ankerscheibe repräsentativer Zeitpunkt bestimmbar ist.

Um bei einer solchen Bremsenüberwachungsvorrichtung die Wartungsfreundlichkeit zu verbessern, sind ein Speicher, in dem ein erster, für einen vorbestimmten Verschleißwert repräsentativer, den Spulenstrom darstellender Grenzwert ablegbar ist, und ein Komparator vorgesehen, durch den der vom Sensor zum Einschaltpunkt gemessene Spulenstrom mit dem Grenzwert vergleichbar und durch den in Abhängigkeit vom Ergebnis dieses Vergleichs ein für den derzeitigen Verschleißzustand der Bremse repräsentatives Verschleißsignal ausgebbar ist. Durch eine solche Bremsenüberwachungsvorrichtung können handelsübliche Bremsen nachträglich ergänzt und in ihrer Wartungsfreundlichkeit erheblich verbessert werden.

Als Speicher kann ein digitaler Speicher oder ein analoger Speicher, auch in Form von manuell betätigbaren Schaltern vorgesehen sein.

Im Speicher kann ferner der zweite Grenzwert abgespeichert sein, der einen vom ersten Verschleißzustand unabhängigen Verschleißzustand ebenfalls in Form eines Wertes für den Spulenstrom zum Einschaltpunkt darstellt.

Im Folgenden wird die Erfindung anhand einer Ausführungsform mit Bezug auf die Zeichnungen beispielhaft erläutert. Dabei können, entsprechend den oben beschriebenen, jeweils für sich als vorteilhaft zu betrachtende Ausgestaltungen, einzelne Merkmale der beschriebenen Ausführungsform weggelassen und/oder beliebig miteinander kombiniert werden.

Es zeigen:
- Fig. 1: eine schematische Darstellung einer Bremse, bei der das erfindungsgemäße Verfahren und die erfindungsgemäße Vorrichtung eingesetzt werden können;
- Fig. 2: eine schematische Darstellung des Verlaufes des Spulenstroms sowie der zeitlichen Ableitung des Spulenstroms beim Einschalten einer mit Gleichstrom betriebenen Bremse;
- Fig. 3: eine schematische Darstellung des Verlaufs des Spulenstroms, der zeitlichen Ableitung des Spulenstroms und einer diese zeitliche Ableitung repräsentierenden Referenzgröße beim Einschalten einer mit gleichgerichtetem Wechselstrom betriebenen Bremse;
- Fig. 4: eine schematische Darstellung des Verlaufs des Spulenstroms bei verschiedenen Verschleißzuständen der Bremse der Fig. 1;
- Fig. 5: eine schematische Darstellung als Beispiel für die Berechnung der in einem Wartungsintervall verbleibenden, restlichen Betriebsdauer;
- Fig. 6: eine schematische Darstellung einer Ausführungsform einer efindungsgemäßen Überwachungsvorrichtung.

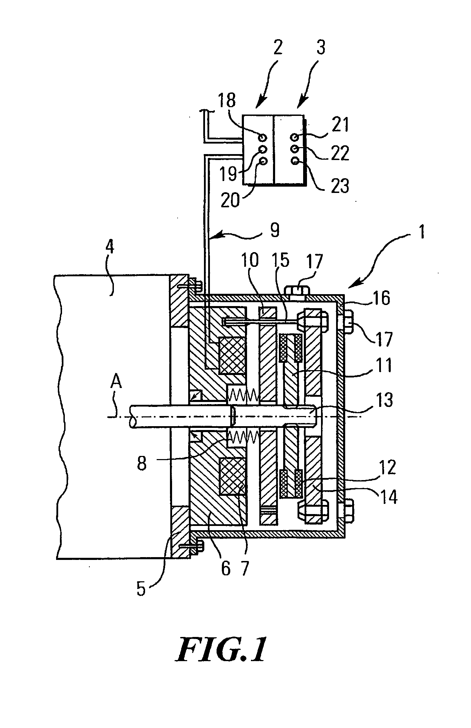

Fig. 1 zeigt eine Bremse 1, die mit einem Bremswächter 2 und einer erfindungsgemäßen Überwachungsvorrichtung 3 versehen ist.

Bei dem in Fig. 1 dargestellten Ausführungsbeispiel einer Bremse 1 handelt es sich um eine elektromagnetische Zweischeiben-Federdruckbremse 1, die an einem lediglich schematisch dargestellten Elektromotor 4 über einen Normflansch 5 angeflanscht ist. Am Normflansch 5 ist ein Spulenkörper 6 angebracht, der eine Spule 7 sowie über den Umfang verteilte Federn 8 aufnimmt.

Die Spule 7 wird über Versorgungsleitungen 9 mit Spulenstrom versorgt.

Wird der Spule 7 durch die Versorgungsleitungen 9 Spulenstrom zugeführt, so erzeugt die Spule 7 ein Magnetfeld. Das Magnetfeld wirkt auf eine in axialer Richtung A beweglich an dem Spulenkörper 6 gehaltene Ankerscheibe 10 ein. Ist das Magnetfeld stark genug, so wird die Ankerscheibe 10 gegen die Wirkung der Federn 8 zur Spule gezogen. Fließt kein Spulenstrom durch die Spule 7 oder ist das von der Spule aufgebaute Magnetfeld zu schwach, so drücken die Federn 8 die Ankerscheibe 10 von der Spule weg gegen eine Reibscheibe 11, die mit Reibbelägen 12 versehen ist.

Die Reibscheibe 11 ist mit einer mit dem Elektromotor 4 verbundenen und von diesem angetriebenen Welle 13 drehstarr verbunden. Durch die Wirkung der Federn 8 wird die Reibscheibe 11 zwischen die Ankerscheibe 10 und eine in axialer Richtung A unbeweglichen zweiten Bremsscheibe 14 eingeklemmt, so dass die Reibbeläge 12 zur Anlage an die Bremsscheiben 10, 14 gelangen. Dadurch entsteht eine Reibwirkung, die eine Drehbewegung der Welle 13 abbremst. Gleichzeitig entsteht durch die Reibung an den Reibbelägen 12 ein Abrieb und ein Verschleiß, so dass die Reibbeläge 12 allmählich dünner werden.

Mit dünner werdenden Reibbelägen 12 steigt der Abstand der Ankerscheibe 10 von der Spule 7 und sinkt die Kraft der Federn 8, bis zu einem Punkt, an dem eine ausreichende Bremswirkung aufgrund der mit zunehmender Längung nachlassenden Federkraft und ein sicheres Anziehen der Ankerscheibe 10 durch die nunmehr zu weit entfernte Spule 7 nicht mehr gewährleistet ist. Um dies zu vermeiden, muss in regelmäßigen Abständen die Reibscheibe 11 mit den Reibbelägen 12 ausgetauscht werden. Alternativ oder zusätzlich kann auch eine Spielverstellung 15 an der Bremse vorgesehen sein, durch welche ein Abrieb der Reibbeläge 12 ausgeglichen und die relative Lage der Scheiben 10, 11, 14 zum Spulenkörper 6 und relativ zueinander eingestellt werden kann.

Falls die Bremse 1 als eine wasserdichte bzw. seewassergeschützte Bremse ausgeführt und mit einer im Wesentlichen wasserdichten Haube 16 versehen ist, so kann durch Wartungsöffnungen 17 ohne Abnehmen der Haube die Spielverstellung 15 betätigt und das Bremsenspiel eingestellt werden.

Da beispielsweise bei Krananlagen für Häfen oder bei Baukränen die Bremsen am Elektromotor 4 oftmals schwer zugänglich sind, ist es wünschenswert, dass an dem Ort, von dem aus die Bremse kontrolliert wird, beispielsweise von einem Führerhaus des Kranes aus, der Betriebszustand und der Verschleißzustand der Bremse überwacht wird. Dadurch werden aufwändige Inspektionen der Bremse selbst überflüssig.

Der Betriebszustand der Bremse 1 wird in der Fig. 1 dargestellten Ausführungsform durch den Bremswächter 2 überwacht. Eine Anzeige 18 zeigt beispielsweise dem Benutzer an, dass sich die Ankerscheibe unter Wirkung der Federn 8 gerade im Bremszustand befindet, d.h. gegen die Reibbelagscheibe 11 gepresst wird. Eine weitere Anzeige 19 zeigt an, dass die Ankerscheibe sich gerade in einer Freilaufstellung befindet und durch die Spule 7 gegen den Spulenkörper 6 gezogen wurde. Eine Anzeige 20 kann eine Betriebsstörung anzeigen.

Die Überwachungsvorrichtung 3 überwacht den Verschleißzustand der Bremse 1 und zeigt über eine Anzeige 21 an, dass derzeit und in absehbarer Zukunft, beispielsweise in den nächsten n vorbestimmten Monaten, keine Wartungsarbeiten an der Bremse notwendig sind. Eine Anzeige 22 kann anzeigen, dass in einem bestimmten Zeitpunkt, beispielsweise innerhalb der nächsten sechs Monate oder innerhalb der nächsten vier Wochen, die Wartung der Bremse 1 fällig ist. Eine Anzeige 23 kann anzeigen, dass die Wartung der Bremse 1 in Kürze dringend erfolgen muss oder aber das Wartungsintervall überschritten wurde.

Sowohl der Bremswächter 2 als auch die Überwachungsvorrichtung 3 sind lediglich an die Versorgungsleitungen 9 der Spule 7 angeschlossen und geben die Signale über die Anzeigen 18 bis 23 nur aufgrund der Auswertung des Spulenstroms, der Spulenspannung sowie der zeitlichen Ableitung dieser beiden Größen aus. Dadurch können der Bremswächter 2 und die Überwachungsvorrichtung 3 beliebig entfernt von der Bremse 1, also auch im Sichtfeld eines Benutzers, angeordnet sein.

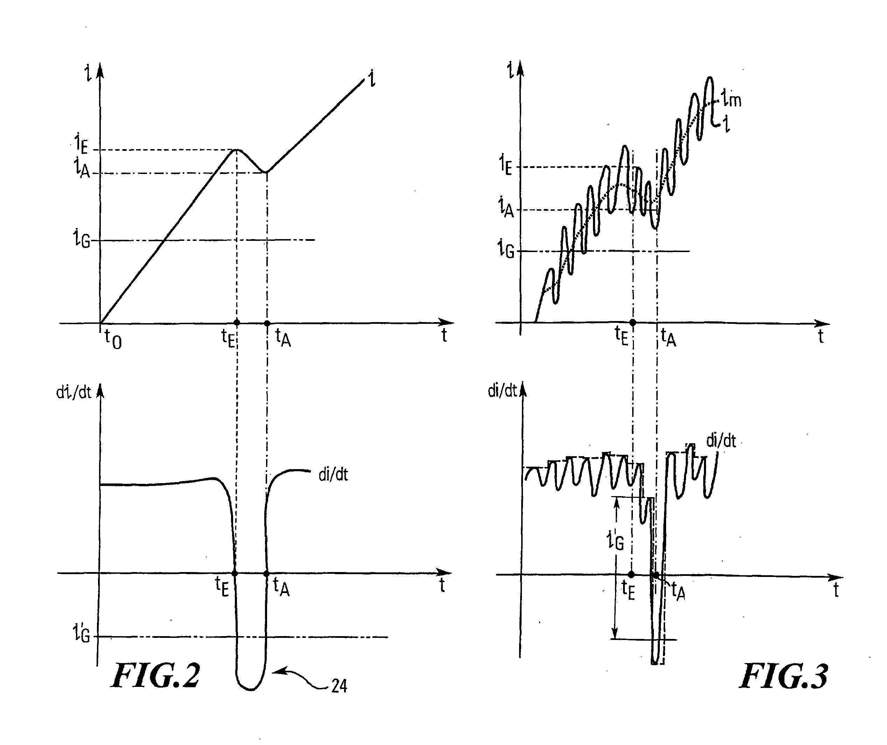

Die Funktion des Bremswächters 2 ist in der WO-A-03/032479 beschrieben. Im Folgenden wird daher nur kurz auf deren Funktion eingegangen, soweit dies für die Funktion der Überwachungsvorrichtung 3 notwendig ist. Hierzu wird im Folgenden auf die Figuren 2 und 3 verwiesen. Die Fig. 2 zeigt den Verlauf des durch die Versorgungsleitung 9 zur Spule 7 geleiteten Spulenstroms i über die Zeit t ab einem Einschalten des Spulenstroms i zu einem Zeitpunkt t₀ bei vorher abgeschaltetem Spulenstrom. Ferner zeigt die Fig. 2 unten die zeitliche Ableitung di/dt des Spulenstroms i. Die in Fig. 2 schematisch dargestellten Verläufe sind typisch für eine gleichspannungsbetriebene Bremse 1.

Wird zu dem Zeitpunkt t₀ der Spulenstrom an die Spule 7 über die Versorgungsleitung 9 eingeschaltet, so steigt dieser zunächst bis zu einem Zeitpunkt t_{E} an, zu dem er den Wert i_{E} erreicht. In der Zeit zwischen t₀ und t_{E} wird das Magnetfeld der Spule 7 aufgebaut, bis es eine Stärke erreicht, um die Ankerscheibe 10 gegen die Wirkung der Federn 8 in Bewegung zu setzen. Die Bewegung der Ankerscheibe 10 führt zu einer Induktion eines Gegenstromes in der Spule 7, so dass während der Bewegung der Ankerscheibe 10 der Strom abfällt. Zum Zeitpunkt t_{A} schlägt die Ankerscheibe 10 gegen den Spulenkörper 6, so dass deren Bewegung abrupt endet. Von diesem Zeitpunkt t_{A} an steigt der Spulenstrom i wieder stetig an.

Im zeitlichen Verlauf der Zeitableitung di/dt des Stromes i macht sich die Bewegung der Ankerscheibe zwischen den Zeitpunkten t_{E} und t_{A} durch eine negative Spitze 24 im Verlauf von di/dt bemerkbar. Diese wird durch den Bremswächter 2 wie folgt erfasst:
Bei Bremsen 1, die mit gleichgerichtetem Wechselstrom betrieben werden, sind die dynamischen Verläufe des Stroms i und der zeitlichen Ableitung di/dt des Stroms i weniger glatt als bei gleichstrombetriebenen Bremsen und von der Frequenz des Wechselstroms überlagert. In Fig. 3 ist schematisch der Verlauf des Spulenstroms i und dessen zeitlicher Ableitung di/dt einer mit gleichgerichtetem Wechselstrom betriebenen Spule 7 dargestellt.
Im Bremswächter 2 wird aus der zeitlichen Ableitung di/dt eine Referenzgröße i'_{R} gebildet, durch die die wechselstrombedingten Schwankungen geglättet werden. Wie in Fig. 3 zu erkennen ist, weist die Funktion i'_{R} eine Treppenform auf. Die Treppenfunktion i'_{R} kann beispielsweise jeweils die Maximalwerte der zeitlichen Ableitung di/dt des Stromes i darstellen.

Überschreitet die Differenz zweier aufeinanderfolgender Maxima der zeitlichen Ableitung di/dt des Spulenstroms oder zweier aufeinanderfolgender Werte der Referenzgröße i'_{R} einen vorbestimmten Grenzwert i'_{G}, so gibt der Bremswächter 2 ein Einschalt-Signal aus, dass die Bremse erfolgreich durch Einschalten der Spule 7 ausgerückt wurde.

Als zusätzliches Kriterium für die Ausgabe des Einschalt-Signals durch den Bremswächter kann das Überschreiten eines Grenzwertes i_{G} durch den Strom i oder einen aus dem Strom i gebildeten Mittelwert im verwendet werden. Um die Fehlersicherheit zu erhöhen, kann das Einschalt-Signal durch den Bremswächter 2 in dieser Konfiguration nur dann ausgegeben, wenn sowohl der Grenzwert i_{G} durch den Spulenstrom als auch der Grenzwert i'_{G} durch die Differenz der Werte der Referenzgröße i'_{R} überschritten wird.

Durch die Bildung der Referenzgröße i'_{R} ist es möglich, den Bremswächter 2 sowohl bei gleichstrombetriebenen als auch bei mit gleichgerichteten Wechselstrom betriebenen Bremsen einzusetzen und identische Kriterien zur Auslösung des Einschalt-Signals zu verwenden.

Wie aus den obigen Erläuterungen hervorgeht, setzt sich die Ankerscheibe 10 in etwa zu dem Zeitpunkt t_{E} in Bewegung, zu dem der Spulenstrom i oder der daraus gebildete Mittelwert im, im Folgenden wird der Einfachheit halber lediglich von Spulenstrom gesprochen, ein Maximum i_{E} im Strom erreicht. Dieser Punkt wird als Einschaltpunkt bezeichnet.

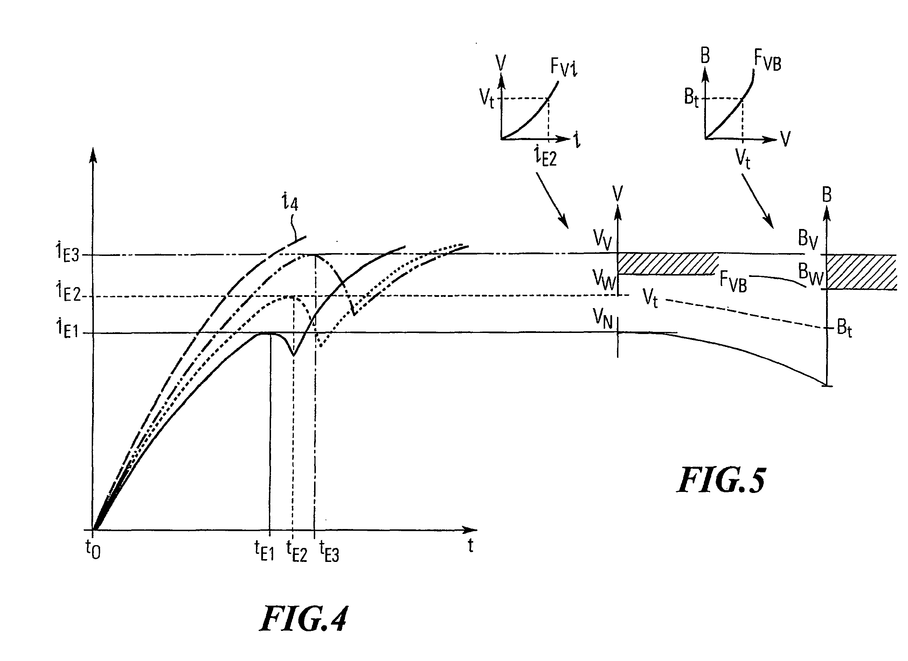

Der Wert i_{E} des Spulenstroms am Einschaltpunkt ändert sich mit dem Grad des Verschleißes der Bremse, wie im Folgenden mit Bezug auf die Fig. 4 erläutert wird. In Fig. 4 ist der zeitliche Verlauf des Spulenstroms bei verschiedenen Verschleißgraden der Bremse in unterschiedlichen Strichlinien dargestellt.
Wie in Fig. 4 zu erkennen ist, steigt mit zunehmendem Verschleiß, d.h. mit zunehmendem Abstand der Ankerscheibe von der Spule 7, der Spulenstrom i_{E} am Einschaltpunkt: Bei einer neuen, unverschlissenen Bremse befindet sich die Ankerscheibe 10 nahe am Spulenkörper 6, so dass sie sich bereits bei einem relativ schwachen Magnetfeld und einem demzufolge niedrigen Spulenstrom i_{E} zu einem frühen Einschaltpunkt t_{E1} bewegt.

Nach einer größeren Anzahl von Bremsvorgängen, in denen die Reibebeläge 12 abgenutzt wurden, hat sich der Abstand der Ankerscheibe 10 zum Spulenkörper 6 vergrößert. Demzufolge ist nunmehr ein größerer Spulenstrom i_{E2} vonnöten, um die Ankerscheibe 10 in Bewegung zu versetzen. Die Bremse reagiert zu einem späteren Zeitpunkt t_{E2}.

Nimmt der Verschleiß weiter zu, so ist ein nochmals erhöhter Strom i_{E3} vonnöten, um die Ankerscheibe 10 anzuziehen. Der Einschaltpunkt t_{E3} liegt in diesem Fall noch weiter vom Zeitpunkt t₀ entfernt, zu dem die Spule 7 mit dem Spulenstrom beaufschlagt wurde, als bei den beiden vorangegangenen Verschleißzuständen.

Mit zunehmender Betriebsdauer ist der Verschleiß schließlich so groß, dass die Ankerscheibe 10 zu weit von der Spule 7 entfernt ist, um noch von ihr angezogen zu werden. Dieses Beispiel ist schematisch durch den Strom i₄ dargestellt, der stetig ansteigt, ohne dass der für die Bewegung der Ankerscheibe 10 typische Abfall festzustellen ist. In diesem Fall ist die Bremse verschlissen und nicht mehr funktionsfähig.

In der Überwachungsvorrichtung 3 kann nun beispielsweise der Strom i_{E3} am Einschaltpunkt abgespeichert sein, zu dem ein für den sicheren Betrieb der Bremse gerade noch ausreichender Verschleißzustand empirisch festgestellt wurde. Wird im Laufe der Benutzung der Bremse bei jedem Betätigen der Bremse der Spulenstrom i_{E} zum Einschaltpunkt t_{E} gemessen, so kann durch einfachen Vergleich dieses Messwertes i_{E}, beispielsweise i_{E2}, festgestellt werden, ob der Grenzwert i_{E3} überschritten wurde bzw. wie nahe der derzeitige Spulenstrom zum Einschaltpunkt an dem Grenzwert i_{E3} liegt. Als weiterer Grenzwert kann ein Spulenstrom zum Einschaltpunkt für eine neue Bremse, beispielsweise i_{E1}, ebenfalls verwendet werden.

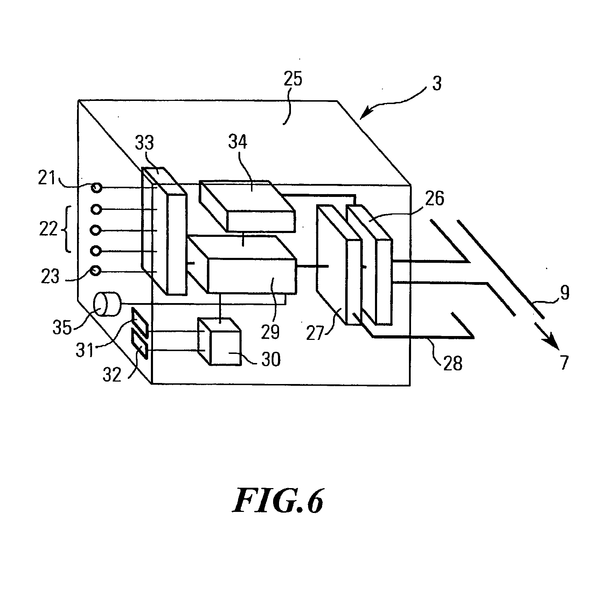

In Fig. 5 ist zu erkennen, dass dem gemessenen Spulenstrom i_{E2} am Einschaltpunkt ein Verschleißzustand Vₜ zugeordnet ist. Jedem vorbestimmten Grenzwert i_{E1}, i_{E3}, mit der der gemessene Spulenstrom i_{E2} verglichen wird, entspricht ein vorbestimmter Verschleißzustand. Bei der beschriebenen Ausführungsform steht der erste Grenzwert i_{E1} für den Verschleißzustand V_{N} einer neuen, noch nicht gebrauchten, also unverschlissenen Bremse. Der Grenzwert i_{E3} steht für den Verschleißzustand V_{V} einer verschlissenen Bremse, bei der gerade noch ein sicherer Betrieb möglich ist. Der Verschleißzustand V_{V} repräsentiert den Verschleißzustand einer Bremse, die direkt gewartet werden muss. Die Lage des gemessenen Vergleichszustandes Vₜ innerhalb des Intervalls V_{N} geht dabei aus einer Bildung aus der Lage des gemessenen Spulenstromes i_{E2} im Intervall i_{E1} - i_{E3} hervor.

Im einfachsten Fall kann die Bremsenüberwachungsvorrichtung 3 eine lineare Abbildungsfunktion durchführen, so dass die Lage des gemessenen Verschleißzustandes Vₜ im Bereich V_{N} - V_{V} der Lage des gemessenen Spulenstroms i_{E2} im Bereich i_{E1} - i_{E3} direkt proportional entspricht. Liegt beispielsweise i_{E2} in der Mitte des Intervalls i_{E1} - i_{E3}, so liegt bei einer solchen Abbildung der Verschleißzustand Vₜ ebenfalls in der Mitte des Bereichs V_{N} - V_{V}.

Da der Spulenstrom i einer Bremse jedoch nicht unbedingt linear mit dem Verschleißzustand V zusammenhängen muss, kann durch eine Funktion F_{Vi} ein nichtlinearer Zusammenhang berücksichtigt werden. Die Funktion F_{Vi} bildet den gemessenen Spulenstrom i_{E2} auf den diesem Spulenstrom entsprechenden Verschleißzustand Vₜ ab. Die Funktion Fvᵢ kann exponentiell, logarithmisch oder in Form eines Polynoms oder empirisch entwickelt sein. Sie kann in der Vorrichtung 1 als Funktion oder Look-up-Tabelle abgelegt sein.

Bei der Berücksichtigung und Anzeige des Verschleißzustandes V kann ein Warn-Verschleißzustand V_{W} vorgesehen sein, der einen Bereich bestimmt, ab dem auf eine demnächst fällige Wartung bzw. auf das Erreichen eines kritischen Verschleißzustandes hingewiesen wird. Bei Verschleißzuständen außerhalb des Bereiches V_{W} - V_{V} wird keine Warnung ausgegeben.

Vom gemessenen Verschleißzustand kann auf die verbleibende Betriebsdauer B im laufenden Wartungsintervall geschlossen werden. Dabei ist dem kritischen Verschleißzustand V_{V} ein Ende B_{V} ein Ende der laufenden Betriebsdauer zugeordnet. Dem Warn-Verschleißzustand V_{W} kann entsprechend eine Warn-Betriebsdauer zugeordnet sein, bei deren Unterschreiten ein Warnsignal ausgegeben wird, um den Benutzer auf das drohende Ende der Betriebsdauer hinzuweisen.

Dem gemessenen Verschleißzustand Vₜ ist eine gemessene Rest-Betriebsdauer Bₜ zugeordnet, die repräsentativ für die bis zum Erreichen des Endes des Wartungsintervalls B_{V} verbleibende Betriebsdauer in Jahren, Monaten, Tagen und/oder Stunden ist.

Um dem Verschleißzustand V eine entsprechende verbleibende Betriebsdauer B zuzuordnen, kann in der Vorrichtung 1 eine Funktion F_{VB} implementiert sein. Durch die Funktion F_{VB} wird jedem Verschleißzustand V im Bereich V_{N} - V_{V} eine eindeutige verbleibende Betriebsdauer B zugeordnet. Die Funktion F_{VB} kann linear sein oder auch nichtlineare Zusammenhänge, die empirisch ermittelt werden, wiedergeben. Die Funktion F_{VB} kann in einem Speicher der Vorrichtung 1 als Look-up-Tabelle abgelegt sein oder als eine Funktion. Auch die Funktion F_{VB} kann empirisch oder durch Simulationen bestimmt sein.

Vom gemessenen Spulenstrom i_{E2} lässt sich auch direkt auf die verbleibende Betriebsdauer Bₜ schließen, in dem die beiden Funktionen Fᵥᵢ und F_{VB} miteinander zu einer einzigen Funktion F_{VB} verknüpft werden, die den Strom i_{E2} direkt auf die verbleibende Betriebsdauer Bₜ abbildet. Diese Zusammenfassung ändert nichts daran, dass durch den Spulenstrom i_{Ew} eine für den Verschleiß V der Bremse repräsentative Messgröße erfasst wurde.

Fig. 6 zeigt schematisch den Aufbau einer Überwachungsvorrichtung 3, mit der der Verschleißzustand einer Bremse 1 überwacht werden kann.

Die Bremsenüberwachungsvorrichtung 3 weist ein Gehäuse 25 auf, dessen Abmessungen gängigen Standardmaßen entspricht.

Die Bremsenüberwachungsvorrichtung 3 weist einen Sensor 26 auf, durch den der Spulenstrom durch die Versorgungsleitungen 9 zur Spule 7 hin gemessen und in ein internes Datenformat umgewandelt, beispielsweise digitalisiert, wird. Die Werte für den Spulenstrom werden dann an eine Auswerteeinheit 27 weitergeleitet, welche den Spulenstrom I_{E} am Einschaltpunkt bestimmt. Wird ein Bremswächter 2 zusammen mit der berwachungsvorrichtung 3 verwendet, so kann über eine interne Datenverbindung 28 der Spulenstrom zum Einschaltpunkt auch vom Bremswächter 2 zur Überwachungsvorrichtung 3 gesendet werden. Hierzu ist der Bremswächter 2 so ausgestaltet, dass er den Spulenstrom i_{E} erfasst.

In einem Komparator 29 wird dann der von der Auswerteeinheit 27 oder vom Bremswächter 2 bestimmte Spulenstrom zum Einschaltpunkt mit einem oder mehreren Grenzwerten des Spulenstroms zum Einschaltpunkt für vorbestimmte Verschleißzustände verglichen. Diese Grenzwerte sind in einem Speicher 30 abgelegt und können beispielsweise durch manuell betätigbare Schalter 31, 32, z.B. DIP-Schalter, verändert werden. Ein Schalter 31 kann beispielsweise zum Einstellen des Grenzwertes bei verschlissener Bremse und ein Schalter 32 für den Grenzwert bei neuer Bremse vorgesehen sein.

Der Komparator 29 kann so ausgestaltet sein, dass er spezielle Vergleichskurven, beispielsweise einen exponentiell voranschreitenden Verschleiß mit zunehmender Betriebsdauer berücksichtigt, wie dies im Zusammenhang mit Fig. 5 erläutert wurde. Der Komparator 29 gibt in Abhängigkeit vom Ergebnis dieses Vergleichs ein Signal an eine Ausgabeeinheit 33 aus. Die Anzeigen 21 bis 23 werden dann in Abhängigkeit von dem Signal des Komparators 29 betätigt. An den Anzeigen lässt sich die Länge der verbleibenden Betriebsdauer im laufenden Wartungsintervall ablesen. Im Unterschied zu der in Fig. 1 dargestellten Ausführungsform der Bremsenüberwachungsvorrichtung 3 weist die Bremsenüberwachungsvorrichtung 3 der Fig. 6 mehrere Anzeigen 22 auf, um die noch verbleibenden Betriebsdauer bis zum nächsten Wartungszeitpunkt anzuzeigen.

Zusätzlich kann die Bremsenüberwachungsvorrichtung 3 einen weiteren Speicher 34 aufweisen, in dem die Betriebsgeschichte der überwachten Bremse 1 abgespeichert wird, beispielsweise die Anzahl der in dem derzeitigen Wartungsintervall erfolgten Bremsbetätigungen und dem dazwischen liegenden Zeitraum. Der Speicher 34 kann mit einer internen Uhr, um den Zeitpunkt der Bremsbetätigungen festzustellen und mit abzuspeichern, ausgestaltet sein. Durch die Anzahl der erfolgten Bremsbetätigungen kann die Lage des derzeitigen Verschleißzustandes innerhalb des Verschleißintervalls modifiziert werden. So kann beispielsweise bei einem hohen Verschleißgrad, wenn im laufenden Wartungsintervall bislang nur wenig Bremsbetätigungen erfolgt sind, der tatsächliche Verschleißzustand niedriger sein, als er durch die Messung des Spulenstroms i_{E} zum Einschaltpunkt ohne eine derartige Korrektur ermittelt würde.

Über einen Schalter 35 kann schließlich die Überwachungsvorrichtung 3 beispielsweise nach Abschluss der Wartungsarbeiten zurückgesetzt werden.

Durch die Anzeige des verbleibenden Wartungsintervalls, beispielsweise über Leuchtdioden 22 oder über optisch dargestellte Schriftzeichen, die repräsentativ für eine Zeitzählung der restlichen Betriebsdauer in Stunden, Tagen, Wochen oder Monaten sind, kann der Betreiber der Bremse 1 die Wartungsarbeiten optimal mit den Wartungsarbeiten an anderen Bauelementen wie dem Elektromotor 4 koordinieren.

Der Speicher 34 kann auch dazu verwendet werden, bei Betriebsunfällen die ordnungsgemäße Wartung der Bremse nachzuweisen.

Anstelle der in Fig. 5 gezeigten Grenzwerte i_{E1} und i_{E2}, die jeweils repräsentativ für den Verschleißzustand einer noch nicht verschlissenen und einer verschlissenen Bremse sind, kann natürlich auch ein anderer Grenzwert verwendet werden, wobei dann auf die gleiche Weise wie beschrieben die relative Lage des gerade gemessenen Spulenstroms zum Einschaltpunkt zu diesem Grenzwert bestimmt wird. Wie bei den in Zusammenhang mit der Fig. 5 beschriebenen Grenzwerten bestimmt sich die verbleibende Betriebsdauer durch den Abstand des gerade gemessenen Spulenstroms vom abgespeicherten Grenzwert unter Verwendung einer entsprechend angepassten Funktion F_{VB}.

## Patentansprüche

1. Verfahren zum Überwachen einer elektromagnetisch betätigbaren Bremse (1) mit einer ein Magnetfeld erzeugenden Spule (7) und einer durch das Magnetfeld bewegbar angeordneten Ankerscheibe (10), bei dem das Magnetfeld durch Beaufschlagen der Spule (7) mit einem Spulenstrom (i) erzeugt und die Bewegung der Ankerscheibe (10) durch Überwachen des Zeitverlaufs des Spulenstroms (i) bestimmt wird, **dadurch gekennzeichnet, dass** aus dem Zeitverlauf des Spulenstroms (i) ein Einschaltpunkt (t_{E}) bestimmt wird, der für den Bewegungsbeginn (t_{E}) der Ankerscheibe (10) repräsentativ ist, dass der Spulenstrom (i_{E}) zum Einschaltpunkt (t_{E}) mit einem vorbestimmten ersten Grenzwert (i_{E1}, i_{E3}) verglichen wird, der für einen vorbestimmten ersten Verschleißzustand (V_{N}, V_{V}) der Bremse (1) repräsentativ ist, und dass in Abhängigkeit vom Ergebnis dieses Vergleichs ein für den derzeitigen Verschleißzustand (Vₜ) der Bremse (1) repräsentatives Signal ausgegeben wird.

2. Verfahren nach Anspruch 1, **dadurch gekennzeichnet, dass** der Spulenstrom (i_{E}) zum Einschaltpunkt mit einem vorbestimmten zweiten Grenzwert (i_{E1}, i_{E3}) verglichen wird, der für einen vorbestimmten, vom ersten Verschleißzustand (V_{N}, V_{V}) unterschiedlichen zweiten Verschleißzustand (V_{V}, V_{N}) repräsentativ ist.

3. Verfahren nach Anspruch 2, **dadurch gekennzeichnet, dass** die Lage des Wertes für den Spulenstrom (i_{E}) zum Einschaltpunkt innerhalb eines vom ersten und zweiten Grenzwert (i_{E1}, i_{E3}) aufgespannten Verschleißbereiches bestimmt wird.

4. Verfahren nach Anspruch 3, **dadurch gekennzeichnet, dass** der Verschleißzustand (V₂) der Bremse als Funktion der Lage des Wertes des Spulenstroms (i_{E}) im Verschleißbereich (i_{E1}, i_{E3}) bestimmt wird.

5. Verfahren nach einem der obengenannten Ansprüche, **dadurch gekennzeichnet, dass** einer der Grenzwerte (i_{E1}, i_{E3}) den Verschleißzustand (V_{N}) einer im Wesentlichen unbenutzten Bremse (1) entspricht.

6. Verfahren nach einem der obengenannten Ansprüche, **dadurch gekennzeichnet, dass** einer der Grenzwert (i_{E1}, i_{E3}) den Verschleißzustand (V_{V}) einer im Wesentlichen verschlissenen Bremse entspricht.

7. Verfahren nach einem der obengenannten Ansprüche, **dadurch gekennzeichnet, dass** eine verbleibende Betriebsdauer (B) der Bremse (1) bis zum Ende einer Betriebsdauer (B_{V}) aus der Differenz des gemessenen Spulenstroms (iₜ) zum Einschaltpunkt zu dem oder den Grenzwerten (i_{E1}, i_{E3}) berechnet wird.

8. Verfahren nach Anspruch 7, **dadurch gekennzeichnet, dass** ein für die verbleibende Betriebsdauer (B) repräsentatives Wartungssignal ausgegeben wird.

9. Verfahren nach Anspruch 8, **dadurch gekennzeichnet, dass** das Wartungssignal ausgegeben wird, wenn die verbleibende Betriebsdauer (B) kleiner als ein vorbestimmter Grenzwert (B_{W}) ist.

10. Verfahren nach einem der obengenannten Ansprüche, **dadurch gekennzeichnet, dass** der Spulenstrom von einem von der Bremse (1) entfernten Ort aus fernüberwacht wird.

11. Verfahren nach einem der obengenannten Ansprüche, **dadurch gekennzeichnet, dass** die Betriebsgeschichte der Bremse (1) bei einer Berechnung der verbleibenden Betriebsdauer (B) berücksichtigt wird.

12. Verfahren nach Anspruch 11, **dadurch gekennzeichnet, dass** die im laufenden Wartungsintervall erfolgten Bremsbetätigungen bei der Berechnung der verbleibenden Betriebsdauer (B) in Abhängigkeit vom Verschleißzustand (Vₜ) gewichtet werden.

13. Bremsenüberwachungsvorrichtung (3), die an Spulenversorgungsleitungen (9) einer Bremse (1) mit einer ein Magnetfeld erzeugenden Spule (7) und einer im Magnetfeld bewegbaren Ankerscheibe (10) anschließbar ausgestaltet ist, mit einem Sensor (26), durch den ein zur Betätigung der Bremse (1) an die Spule (7) geleiteter Spulenstrom (i) erfassbar ist, mit einer Auswerteeinheit (27), durch die in Abhängigkeit vom zeitlichen Verlauf in dessen Spulenstrom (i) ein Einschaltpunkt (i_{E}) als für den Beginn der Bewegung der Ankerscheibe (10) repräsentativer Zeitpunkt (T_{E}) bestimmbar ist, **gekennzeichnet durch** einen Speicher (30), in dem ein erster, für einen vorbestimmten Verschleißwert (V_{N}, V_{V}) repräsentativer, dem Spulenstrom (i₁, i₂) darstellender Grenzwert ablegbar ist, und **durch** einen Komparator (29), **durch** den der vom Sensor (26) zum Einschaltpunkt (t_{E}) gemessene Spulenstrom (i_{E}) mit dem Grenzwert (i_{E1}, i_{E3}) vergleichbar und in Abhängigkeit vom Ergebnis dieses Vergleichs ein für den derzeitigen Verschleißzustand (Vₜ) der Bremse (1) repräsentatives Signal ausgebbar ist.

14. Bremsenüberwachungsvorrichtung (3) nach Anspruch 13, **dadurch gekennzeichnet, dass** der Sensor (26) der Bremsenüberwachungsvorrichtung entfernt von der Bremse (1) angeordnet ist.

## Claims

1. Method for monitoring an electromagnetically actuable brake (1), having a coil (7) generating a magnetic field and an armature disk (10) arranged to be movable by the magnetic field, in which the magnetic field is generated by supplying the coil (7) with a coil current (i) and the movement of the armature disk (10) is determined by monitoring the change over time of the coil current (i), **characterised in that** from the change over time of the coil current (i) a switch-on point (t_{E}) is determined which is representative of the start of movement (t_{E}) of the armature disk (10), that the coil current (i_{E}) at the switch-on point (t_{E}) is compared with a predetermined first threshold value (i_{E1}, i_{E3}) which is representative of a predetermined first wear state (V_{N}, V_{V}) of the brake (1) and that as a function of the results of this comparison a signal representative of the current wear state (Vₜ) of the brake (1) is output.

2. Method according to claim 1, **characterised in that** the coil current (i_{E}) at the switch-on point is compared with a predetermined second threshold value (i_{E1}, i_{E3}) which is representative of a predetermined second wear state (V_{V}, V_{N}) differing from the first wear state (V_{N}, V_{V}).

3. Method according to claim 2, **characterised in that** the position of the value of the coil current (i_{E}) at the switch-on point is determined within a wear range subtended by the first and second threshold value (i_{E1}, i_{E3}).

4. Method according to claim 3, **characterised in that** the wear state (V₂) of the brake is determined as a function of the position of the value of the coil current (i_{E}) in the wear range (i_{E1}, i_{E3}).

5. Method according to one of the preceding claims, **characterised in that** one of the threshold values (i_{E1}, i_{E3}) coincides with the wear state (V_{N}) of a substantially unused brake (1).

6. Method according to one of the preceding claims, **characterised in that** one of the threshold values (i_{E1}, i_{E3}) coincides with the wear state (V_{V}) of a substantially worn brake.

7. Method according to one of the preceding claims, **characterised in that** a remaining operating life (B) of the brake (1) up to the end of an operating life (B_{V}) is calculated from the difference between the measured coil current (iₜ) at the switch-on point and the limit value or values (i_{E1}, i_{E3}).

8. Method according to claim 7, **characterised in that** a maintenance signal representative of the remaining operating life (B) is output.

9. Method according to claim 8, **characterised in that** the maintenance signal is output when the remaining operating life (B) is less than a predetermined threshold value (B_{W}).

10. Method according to one of the preceding claims, **characterised in that** the coil current is remotely monitored from a location remote from the brake (1).

11. Method according to one of the preceding claims,
**characterised in that** the operating history of the brake (1) is taken into account in a calculation of the remaining operating life (B).

12. Method according to claim 11, **characterised in that** the brake actuations carried out in the current maintenance interval are weighted as a function of the wear state (Vₜ) in the calculation of the remaining operating life (B).

13. Brake monitoring device (3) which is designed to be connectable to coil supply leads (9) of a brake (1) having a coil (7) generating a magnetic field and an armature disk (10) movable in the magnetic field, having a sensor (26) by means of which a coil current (i) conveyed to the coil (7) for actuating the brake (1) is detectable and having an evaluation unit (27) by means of which as a function of the change over time in the coil current (i) thereof a switch-on point (i_{E}) is determinable as a time (T_{E}) representative of the start of movement of the armature disk (10), **characterised by** a memory (30) in which a first threshold value representative of a predetermined wear value (V_{N}, V_{V}) and representing the coil current (i₁, i₂) is storable and by a comparator (29) by means of which the coil current (i_{E}) measured by the sensor (26) at the switch-on point (t_{E}) is comparable with the threshold value (i_{E1}, i_{E3}) and a signal representative of the current wear state (Vₜ) of the brake (1) is outputable as a function of the results of this comparison.

14. Brake monitoring device (3) according to claim 13, **characterised in that** the sensor (26) of the brake monitoring device is arranged remote from the brake (1).

## Revendications

1. Procédé de surveillance d'un frein électromagnétique (1) comportant une bobine (7) produisant un champ magnétique, et une plaque d'induit (10) disposée de manière à pouvoir être déplacée à travers le champ magnétique, dans lequel le champ magnétique est produit par alimentation de la bobine (7) par un courant de bobine (i), et le mouvement de la plaque d'induit (10) est déterminé par surveillance de la variation temporelle du courant de bobine (i), **caractérisé en ce que**, à partir de la variation temporelle du courant de bobine (i), est déterminé un point de mise en circuit (t_{E}) qui est représentatif du début du déplacement (t_{E}) de la plaque d'induit (10), **en ce que**, au point de mise en circuit (t_{E}), le courant de bobine (i_{E}) est comparé à une première valeur limite prédéterminée (i_{E1}, i_{E3}) qui est représentative d'un premier état d'usure (V_{N}, V_{V}) prédéterminé du frein (1), et **en ce qu'**un signal représentatif de l'état actuel d'usure (Vₜ) du frein (1) est délivré en fonction du résultat de cette comparaison.

2. Procédé selon la revendication 1, **caractérisé en ce que**, au point de mise en circuit, le courant de bobine (i_{E}) est comparé à une deuxième valeur limite prédéterminée (i_{E1}, i_{E3}) qui est représentative d'un deuxième état d'usure prédéterminé (V_{V}, V_{N}), différent du premier état d'usure (V_{N}, V_{V}).

3. Procédé selon la revendication 2, **caractérisé en ce que** la position de la valeur du courant de bobine (i_{E}) au point de mise en circuit est déterminée à l'intérieur d'une zone d'usure s'étendant entre la première et la deuxième valeurs limites (i_{E1}, i_{E3}).

4. Procédé selon la revendication 3, **caractérisé en ce que** l'état d'usure (V₂) du frein est déterminé en tant que fonction de la position de la valeur du courant de bobine (i_{E}) dans la zone d'usure (i_{E1}, i_{E3}).

5. Procédé selon l'une des revendications susmentionnées, **caractérisé en ce que** l'une des valeurs limites (i_{E1}, i_{E3}) correspond à l'état d'usure (V_{N}) d'un frein sensiblement inutilisé (1).

6. Procédé selon l'une des revendications susmentionnées, **caractérisé en ce que** l'une des valeurs limites (i_{E1}, i_{E3}) correspond à l'état d'usure (V_{V}) d'un frein sensiblement usé.

7. Procédé selon l'une des revendications susmentionnées, **caractérisé en ce qu'**une durée de fonctionnement restante (B) du frein (1) jusqu'à la fin d'une durée de fonctionnement (B_{V}) est calculée à partir de la différence entre le courant de bobine mesuré (iₜ), au point de mise en circuit, et la ou les valeurs limites (i_{E1}, i_{E3}).

8. Procédé selon la revendication 7, **caractérisé en ce qu'**un signal d'entretien représentatif de la durée de fonctionnement restante (B) est délivré.

9. Procédé selon la revendication 8, **caractérisé en ce que** le signal d'entretien est délivré lorsque la durée de fonctionnement restante (B) est inférieure à une valeur limite prédéterminée (B_{W}).

10. Procédé selon l'une des revendications susmentionnées, **caractérisé en ce que** le courant de bobine est surveillé à distance à partir d'un endroit éloigné du frein (1).

11. Procédé selon l'une des revendications susmentionnées, **caractérisé en ce que** l'historique de fonctionnement du frein (1) est pris en considération lors d'un calcul de la durée de fonctionnement restante (B).

12. Procédé selon la revendication 11, **caractérisé en ce que** les actionnements de frein qui ont eu lieu dans l'intervalle d'entretien courant sont pondérés en fonction de l'état d'usure (Vₜ) lors du calcul de la durée de fonctionnement restante (B).

13. Dispositif de surveillance de frein (3), qui est agencé de manière à pouvoir être raccordé à des lignes d'alimentation de bobine (9) d'un frein (1) comportant une bobine (7) produisant un champ magnétique et une plaque d'induit mobile dans le champ magnétique (10), lequel dispositif de surveillance de frein comporte un capteur (26) à l'aide duquel il est possible de détecter un courant de bobine (i) envoyé à la bobine (7) pour actionner le frein (1), ainsi qu'une unité de traitement (27) à l'aide de laquelle il est possible de déterminer en fonction du temps dans le courant de bobine (i) un point de mise en circuit (i_{E}) en tant qu'instant (T_{E}) représentatif du début du déplacement de la plaque d'induit (10), **caractérisé par** une mémoire (30) dans laquelle il est possible de stocker une première valeur limite représentative d'une valeur d'usure prédéterminée (V_{N}, V_{V}) et représentant le courant de bobine (i₁, i₂), et par un comparateur (29) à l'aide duquel il est possible de comparer le courant de bobine (i_{E}) mesuré par le capteur (26), au point de mise en circuit (t_{E}), à la valeur limite (i_{E1}, I_{E3}) et à l'aide duquel il est possible de délivrer un signal représentatif de l'état actuel d'usure (Vₜ) du frein (1) en fonction du résultat de cette comparaison.

14. Dispositif de surveillance de frein (3) selon la revendication 13, **caractérisé en ce que** le capteur (26) du dispositif de surveillance de frein est disposé à distance du frein (1).
